Europäisches Patentamt

European Patent Office

Office européen des brevets

(19)

(11) Numéro de publication : **0 200 233**
**B1**

(12) **FASCICULE DE BREVET EUROPÉEN**

(45) Date de publication du fascicule du brevet :
27.07.88

(51) Int. Cl.⁴ : **A 47 J 37/04**

(21) Numéro de dépôt : 86106065.5

(22) Date de dépôt : 02.05.86

(54) Porte-rôti pour rôtissoire.

(30) Priorité : 03.05.85 FR 8506764

(43) Date de publication de la demande :
10.12.86 Bulletin 86/45

(45) Mention de la délivrance du brevet :
27.07.88 Bulletin 88/30

(84) Etats contractants désignés :
AT BE CH DE GB IT LI NL SE

(56) Documents cités :
FR-A- 1 099 625
FR-A- 1 460 331
FR-E- 68 137
FR-E- 77 639
GB-A- 946 355
US-A- 2 182 225
US-A- 2 885 951

(73) Titulaire : **MOULINEX**
**7 à 15, rue Jules-Ferry**
**F-93171 Bagnolet Cédex (FR)**

(72) Inventeur : **Mantelet, Jean**
**11, rue Jules-Ferry**
**F-93170 Bagnolet (FR)**

(74) Mandataire : **May, Hans Ulrich, Dr.**
**Thierschstrasse 27**
**D-8000 München 22 (DE)**

Jouve, 18, rue St-Denis, 75001 Paris, France

## Description

L'invention se rapporte à un porte-rôti adapté à équiper une rôtissoire et comprenant une broche horizontale destinée à être entraînée en rotation autour de son axe et adaptée à recevoir une pièce à rôtir, et une lèche-frite disposée sous cette broche pour recueillir le jus de cuisson.

L'invention concerne, plus précisément, un porte-rôti de ce genre qui comporte en outre un arroseur automatique comprenant au moins un godet porté par un bras entraîné en rotation par la broche et s'étendant à distance de cette broche, ce godet étant monté de manière à pouvoir effectuer un pivotement limité angulairement autour d'un axe parallèle à l'axe de rotation de la broche et distant de cet axe de rotation, de façon à prélever dans la lèche-frite à chaque tour une certaine quantité de jus de cuisson et à déverser ce jus au-dessus de la pièce à rôtir.

Un tel arroseur automatique est décrit dans le brevet US-A-2 885 951.

L'invention a pour but de permettre une réalisation notablement simplifiée par rapport à celle décrite dans ce brevet et d'apporter notamment un perfectionnement au dispositif de pivotement du godet.

Dans un porte-rôti selon l'invention l'une des extrémités du bras porte-godet est montée rotative autour d'un axe de pivotement dans un palier qui s'étend parallèlement à l'axe de rotation de la broche et qui est porté par un flasque solidaire en rotation de cette broche, tandis que le godet est fixé rigidement sur l'autre extrémité dudit bras, ladite extrémité rotative du bras portant un doigt s'étendant entre deux butées espacées qui sont solidaires du flasque et avec lesquelles ce doigt coopère pour limiter le pivotement.

Ainsi grâce à cette construction simplifiée, l'utilisation du porte-rôti est rendue commode et le fonctionnement de l'arroseur est toujours assuré puisqu'il ne nécessite aucun réglage particulier de la part de l'utilisateur. De plus, la construction particulière du bras porte-godet et son agencement avec les butées assurent une bonne stabilité du godet puisque ledit bras, dès le début de son mouvement de remontée, vient, par effet de gravité, en appui contre la butée de limitation du mouvement arrière du godet, permettant ainsi à ce godet de conserver pratiquement sa pleine charge jusqu'à la partie supérieure de la pièce à rôtir.

Les caractéristiques et avantages de l'invention ressortiront d'ailleurs de la description qui va suivre, à titre d'exemple, en référence aux dessins annexés dans lesquels :

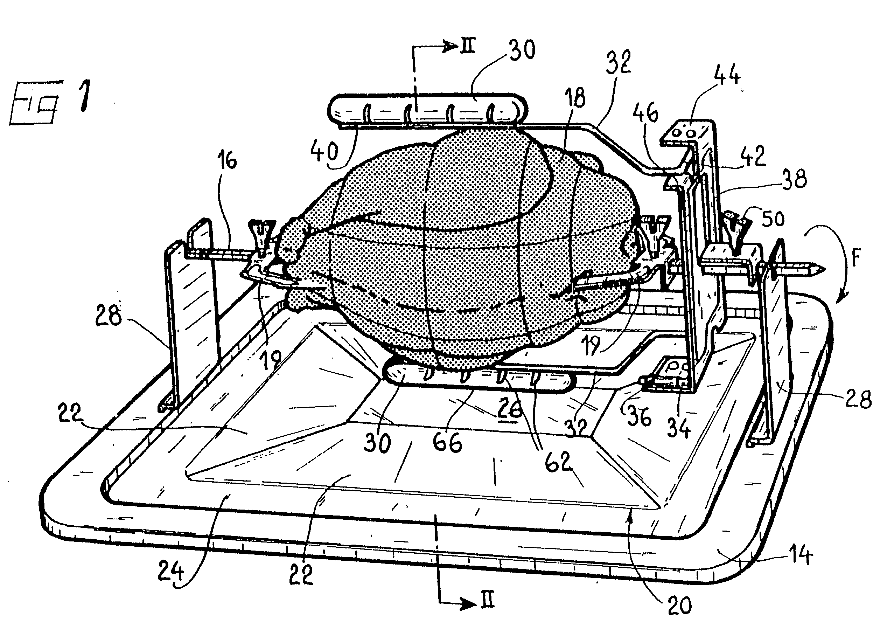

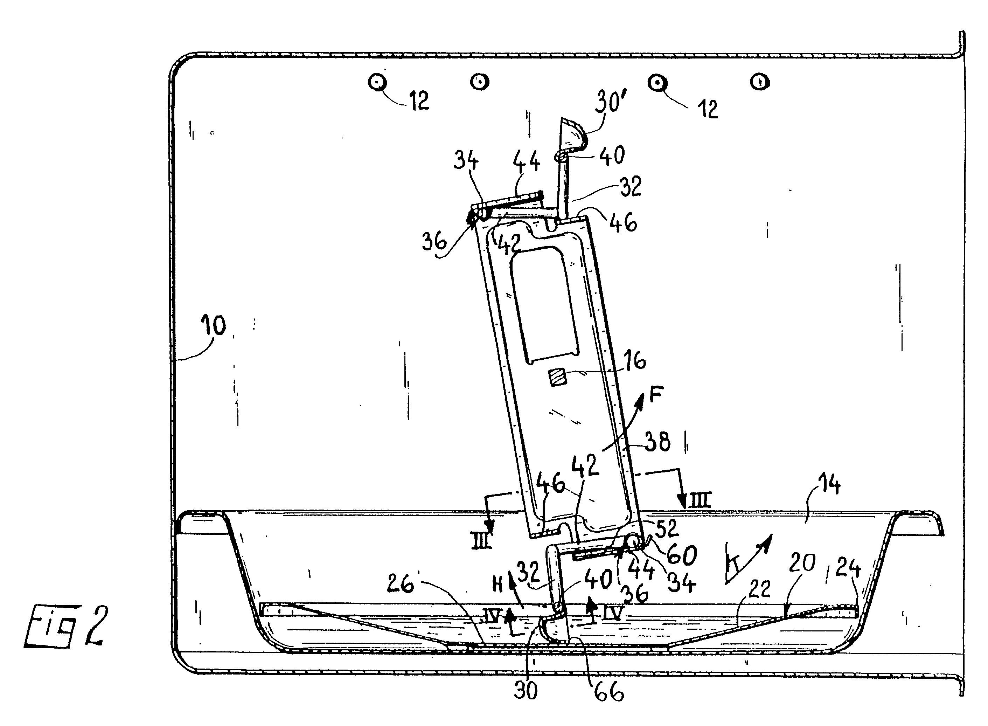

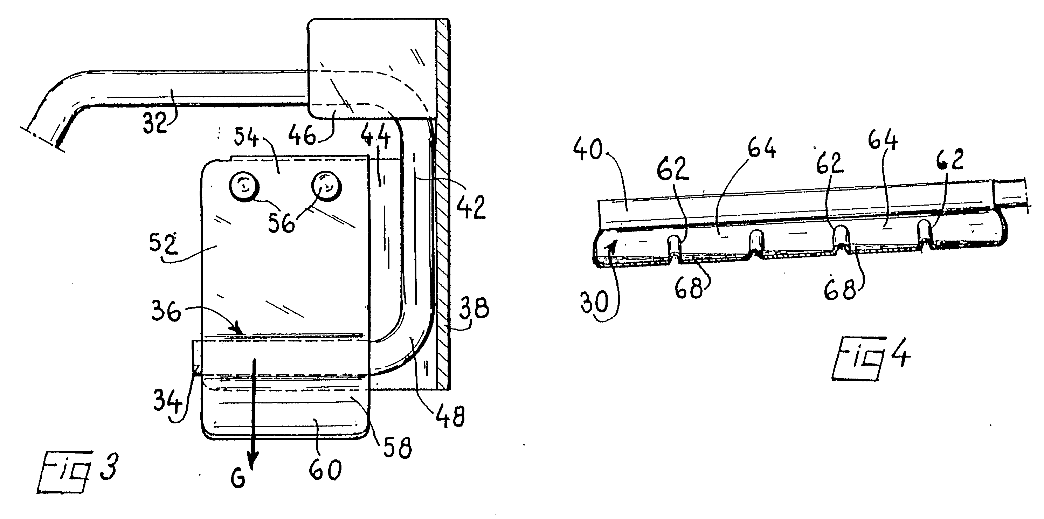

la figure 1 représente en perspective un porte-rôti selon l'invention ; la figure 2 est une vue en coupe verticale selon la ligne II-II de la figure 1 ; la figure 3 représente l'articulation d'un bras porte-godets sur un flasque solidaire de la broche, vue en coupe selon la ligne III-III de la figure 2 ; la figure 4 est une coupe longitudinale d'un godet selon la ligne IV-IV de la figure 2.

Le porte-rôti représenté est destiné à être placé dans une rôtissoire 10 (fig. 2) équipée de résistances chauffantes 12 et d'un plat 14. Ce porte-rôti comprend une broche horizontale 16 à section carrée qui est entraînée en rotation autour de son axe (flèche F) par un moteur électrique (non représenté) incorporé à la rôtissoire, et qui est adaptée à recevoir une pièce à rôtir 18 (fig. 1) maintenue entre deux fourches 19.

Une lèchefrite 20 est disposée sous la broche 16. Cette lèchefrite est emboîtée dans le plat 14. Elle comporte des parties inclinées 22 s'étendant depuis le bord 24 de cette lèchefrite jusqu'à un fond plan central 26 de collecte du jus de cuisson.

La broche 16 est montée rotative dans deux supports verticaux 28 implantés sur deux côtés opposés du plat 14.

Le porte-rôti est équipé d'un arroseur automatique comprenant deux godets 30 portés respectivement par deux bras 32 entrainés en rotation par la broche 16 et s'étendant à distance de cette broche. Ces godets sont adaptés à prélever dans le fond 26 de la lèchefrite, à chaque tour, une certaine quantité du jus de cuisson qui tombe de la pièce à rôtir 18 et à déverser ce jus au-dessus de cette pièce.

Chaque godet 30 est monté de manière à pouvoir effectuer un pivotement limité angulairement autour d'un axe parallèle à l'axe de rotation de la broche 16 et distant de cet axe de rotation. A cet effet, l'une des extrémités 34 du bras porte-godet 32 est montée rotative autour d'un axe de pivotement dans un palier 36 qui s'étend parallèlement à l'axe de rotation de la broche 16 et qui est porté par un flasque 38 solidaire en rotation de cette broche, tandis que le godet 30 est fixé rigidement sur l'autre extrémité 40 du bras 32, ladite extrémité rotative 34 portant un doigt 42 orienté transversalement à l'axe de pivotement et s'étendant entre deux butées espacées 44 et 46 qui sont solidaires du flasque 38 et avec lesquelles le doigt 42 coopère pour limiter le pivotement. Comme représenté clairement aux figures 1 à 3, le doigt 42 de limitation du pivotement est simplement constitué par un tronçon de ce bras lui-même, ce tronçon 42 étant à cet effet adjacent à l'extrémité rotative 34 et formant avec cette extrémité un coude 48.

Le flasque 38 présente un passage central à section carrée qui est enfilé sur la broche 16, ce qui assure l'entrainement en rotation de ce flasque avec la broche. L'immobilisation axiale de ce flasque sur la broche est assurée par serrage d'une vis-papillon 50 vissée dans une patte de ce flasque et qui vient se bloquer sur l'une des faces latérales de la broche.

Les butées 44 et 46 sont constituées par des pattes espacées solidaires du flasque 38 et orientées respectivement dans des plans parallèles à l'axe de rotation de la broche. L'extrémité rotative 34 du bras 32 est emprisonnée entre la patte 44 et une contre-plaque 52 fixée à cette patte et chevauchant ladite extrémité rotative 34 : la patte 44 et la contre-plaque 52 constituent ainsi ensemble le palier de pivotement 36. Comme on le voit bien sur les figures 2 et 3, la contre-plaque 52 est formée par une lame métallique élastique dont une extrémité 54, située d'un côté de la partie rotative 34, est appliquée et fixée par des rivets 56 à la patte 44, et dont l'autre extrémité 58, située de l'autre côté de la partie rotative 34, est laissée libre et présente un bord relevé 60 que l'on peut saisir à la main pour écarter élastiquement cette lame de la patte en vue d'extraire le bras 32 de son palier 36 par un mouvement de translation latérale (flèche G de la figure 3). Les bras 32 sont ainsi rendus amovibles de leur flasque de support 38, ceci à des fins de nettoyage ou de rangement par exemple.

Chaque godet 30 présente une forme allongée dans une direction parallèle à la direction de la broche 16. Le fond de ce godet présente une série de nervures internes transversales 62 (fig. 4) propres à ménager dans ce fond une série de compartiments 64 de répartition du jus de cuisson.

Comme on le comprend, si, lors de la rotation de la broche 16, le bord d'attaque 66 du godet 30 vient buter contre le fond 26 de la lèchefrite 20 (fig. 2), ce godet, alors que la rotation de la broche 16 se poursuit (flèche F), pivote d'abord légèrement par rapport au flasque 38 (flèche H) en sens inverse du mouvement de rotation générale, de sorte que la distance entre le bord d'attaque 66 et l'axe de rotation de la broche diminue suffisamment pour permettre à ce godet de continuer son mouvement de rotation autour de l'axe de la broche avec râclement du bord d'attaque 66 sur une zone du fond de la lèchefrite.

Après que l'opération de prélèvement a été effectuée, l'arbre 32, dès le début de son mouvement de remontée (flèche K), vient en appui contre la butée 46 par effet de gravité, ceci jusqu'à la position haute du godet illustrée en 30' à la figure 2. Ainsi, pendant la plus grande partie du parcours de remontée, le godet conserve pratiquement sa pleine charge sans déversement, grâce au retard angulaire de ce godet par rapport au mouvement général de rotation. Le déversement se produit dans la partie supérieure du parcours de remontée, c'est-à-dire sur la partie supérieure de la pièce à rôtir 18, et non pas sur le côté de celle-ci. C'est seulement après avoir largement dépassé le sommet du parcours que le bras 32 bascule brusquement par rapport au flasque 38 dans le sens de la rotation pour venir en appui contre la seconde butée 44, position pour laquelle le godet est prêt à un nouveau prélèvement dans la lèchefrite 20.

Comme il n'est pas possible, en raison de l'imprécision inévitable des relations géométriques entre la broche 16, le fond 26 de la lèchefrite, les bras 32 et les godets 30, d'assurer un parallélisme rigoureux entre le godet 30 et le fond 26 de la lèchefrite, il peut arriver que, lors du prélèvement du jus de cuisson, ce jus ait tendance à se rassembler en l'une des extrémités du fond du godet, d'où il risque de s'ensuivre un arrosage mal distribué sur la pièce à rôtir 18. Le compartimentage du fond du godet ménagé par les nervures 62 limite cet inconvénient, c'est-à-dire assure, même lorsque le godet est légèrement incliné sur l'horizontale (comme illustré à la figure 4) une répartition plus régulière du jus (68) dans le godet, et partant un arrosage mieux distribué longitudinalement sur la pièce à rôtir.

## Revendications

1. Porte-rôti comprenant une broche horizontale (16) destinée à être entraînée en rotation autour de son axe et adaptée à recevoir une pièce à rôtir (18), une léchefrite (20) disposée sous cette broche, et un arroseur automatique comprenant au moins un godet (30) porté par un bras (32) entraîné en rotation par la broche (16) et s'étendant à distance de cette broche, ce godet (30) étant monté de manière à pouvoir effectuer un pivotement limité angulairement autour d'un axe parallèle à l'axe de rotation de la broche (16) et distant de cet axe de rotation, de façon à prélever dans la léchefrite (20) à chaque tour une certaine quantité de jus de cuisson et à déverser ce jus au-dessus de la pièce à rôtir (18), caractérisé en ce que l'une des extrémités (34) du bras porte-godet (32) est montée rotative autour d'un axe de pivotement dans un palier (36) qui s'étend parallèlement à l'axe de rotation de la broche (16) et qui est porté par un flasque (38) solidaire en rotation de cette broche, tandis que le godet (30) est fixé rigidement sur l'autre extrémité (40) dudit bras (32), ladite extrémité rotative (34) du bras (32) portant un doigt (42) s'étendant entre deux butées espacées (44 et 46) qui sont solidaires du flasque (38) et avec lesquelles ce doigt (42) coopère pour limiter le pivotement.

2. Porte-rôti selon la revendication 1, caractérisé en ce que le bras (32) est monté amovible sur le flasque (38).

3. Porte-rôti selon la revendication 1 ou la revendication 2, caractérisé en ce que, l'une au moins des butées étant constituée par une patte (44) solidaire du flasque (38) et orientée dans un plan parallèle à l'axe de rotation de la broche (16), l'extrémité rotative (34) du bras est emprisonnée entre cette patte (44) et une contre-plaque (52) fixée à cette patte et chevauchant ladite extrémité rotative (34), la patte (44) et la contre-plaque (52) constituant ainsi ensemble le palier (36) de pivotement du bras (32).

4. Porte-rôti selon les revendications 2 et 3, caractérisé en ce que la contre-plaque (52) est constituée par une lame élastique dont une extrémité (54), située d'un côté de l'extrémité rotative (34) du bras (32), est appliquée et fixée à la patte (44), et dont l'autre extrémité (58), située de l'autre côté de l'extrémité rotative (34), est libre, et présente un bord relevé (60) que l'on peut saisir à la main pour écarter cette lame (52) de la patte (44) en vue d'extraire le bras de son palier (36) par un mouvement de translation latérale.

5. Porte-rôti selon l'une quelconque des revendications précédentes, caractérisé en ce que le doigt (42) de limitation du pivotement est constitué par un tronçon du bras (32) lui-même, ce tronçon (42) étant adjacent à l'extrémité rotative (34) de ce bras et formant un coude (48) avec cette extrémité (34).

6. Porte-rôti selon l'une quelconque des revendications précédentes, caractérisé en ce que, le godet (30) présentant une forme allongée dans une direction parallèle à la direction de la broche (16), le fond de ce godet présente une série de nervures internes transversales (62) propres à ménager dans ce fond une série de compartiments (64) de répartition du jus de cuisson.

7. Porte-rôti selon l'une quelconque des revendications précédentes, caractérisé en ce que la lèchefrite (20) comprend des parties inclinées (22) s'étendant depuis le bord (24) de cette lèchefrite jusqu'à un fond plan central (26) de collecte du jus.

**Claims**

1. Roast carrier comprising a horizontal spit (16) intended to be carried in rotation around its axis and adapted to hold a piece to be roasted (18), a drip tray (20) placed under this spit, and an automatic baster comprising at least one bowl (30) supported on an arm (32) carried in rotation by the spit (16) and extending at a distance from this spit, this bowl (30) being mounted in such a way that it can make a pivoting movement, limited angularly, around an axis parallel to the rotation axis of the spit (16) and at a distance from this rotation axis, in such a way as to take a limited quantity of juice from the cooking out of drip tray (20) during each turn, and to pour this juice on top of the piece to be roasted (18), characterized in that one of the ends (34) of the bowl-carrying arm (32) is mounted to rotate about a pivoting axis in a bearing (36) which extends parallel to the rotation axis of spit (16) and which is carried on a flange (38) rotating integrally with this spit, whilst the bowl (30) is rigidly fixed on the other end (40) of the said arm (32), the said turning end (34) of arm (32) carrying a finger (42) extending between two spaced abutments (44 and 46) which are integral with the flange (38), and with which finger (42) cooperates to limit the pivoting.

2. Roast carrier according to Claim 1, characterized in that arm (32) is mounted removably on flange (38).

3. Roast carrier according to Claim 1 or Claim 2, characterized in that at least one of the abutments consists of a flap (44), integral with flange (38) and orientated in a plane parallel to the rotation axis of the spit (16), the turning end (34) of the arm is imprisoned between this flap (44) and a counter plate (52) fixed to this flap and bridging the said turning end (34), flap (44) and counter plate (52) thus together forming bearing (36) for pivoting arm (32).

4. Roast carrier according to Claims 2 and 3, characterized in that counter plate (52) consists of a resilient thin plate, one end of which (54), on one side of turning end (34) of arm (32) touches and is fastened to flap (44), and the other end of which (58), situated at the other side of turning end (34) is free, and has a turned up edge (60) which can be grasped to separate this plate (52) from flap (44) in order to extract the arm from its bearing (36) by a lateral translational movement.

5. Roast carrier according to any one of the previous Claims, characterized in that finger (42) which limits pivoting consists of a section of arm (32) itself, this section (42) being adjacent to the turning end (34) of the arm and making an elbow with this end (34).

6. Roast carrier according to any one of the previous Claims, characterized in that bowl (30) has a shape elongated in a direction parallel to spit (16), and the base of the bowl has a series of internal transverse ribs (62) suitable to make in the base a series of compartments (54) for dividing the cooking juice.

7. Roast carrier according to any one of the previous Claims, characterized in that drip tray (20) has sloping sections (22) extending from the edge (24) of this drip tray to a level central base (26) for collecting the juice.

**Patentansprüche**

1. Grillguthalter mit einem horizontalen Drehspieß (16), der um seine Achse rotierend antreibbar und zur Aufnahme eines Grillgutes (18) eingerichtet ist, einer unter diesem Drehspieß angeordneten Saftschale (20) und einer automatischen Begießvorrichtung, die mindestens einen Schöpflöffel (30) aufweist, der von einem Arm (32) getragen ist, der sich in einem Abstand vom Drehspieß (16) erstreckt und von diesem drehend angetrieben ist, wobei dieser Schöpflöffel (30) so angebracht ist, daß er um eine zur Drehachse des Drehspießes (16) parallele und von dieser entfernte Achse um einen begrenzten Winkel schwenkbar ist, wodurch er bei jeder Umdrehung eine gewisse Menge Bratensaft aus der Saftschale (20) schöpft und über das Grillgut (18) ausgießt, dadurch gekennzeichnet, daß eines der Enden (34) des Löffelträgerarmes (32) um eine Schwenkachse drehbar in einem Lager (36) gehalten ist, das sich parallel zur Drehachse des Drehspießes (16) erstreckt und von einem mit diesem Drehspieß drehfest verbundenen Flansch (38) getragen ist, während der Schöpflöffel (30) am anderen Ende (40) dieses Armes (32) starr befestigt ist, wobei das drehbare Ende (34) des Armes (32) einen Zapfen (42) trägt, der sich zwischen zwei Anschlägen (44 und 46) erstreckt, die in einem Abstand voneinander angeordnet und fest mit dem Flansch (38) verbunden sind und mit denen dieser Zapfen (42) zur Begrenzung der Schwenkbewegung zusammenwirkt.

2. Grillguthalter nach Anspruch 1, dadurch gekennzeichnet, daß der Arm (32) am Flansch (38) abnehmbar gehalten ist.

3. Grillguthalter nach einem der Ansprüche 1 oder 2, dadurch gekennzeichnet, daß mindestens einer der Anschläge von einem Fuß (44) gebildet ist, der mit dem Flansch (38) fest verbunden und in einer zur Drehachse des Drehspießes (16) parallelen Ebene ausgerichtet ist, daß das drehbare Ende (34) des Armes zwischen diesem Fuß (44) und einer Gegenplatte (52) eingespannt ist, die an diesem Fuß befestigt ist und das drehbare Ende (34) übergreift, und daß der Fuß (44) und die Gegenplatte (52) so miteinander das Schwenklager (36) des Armes (32) bilden.

4. Grillguthalter nach den Ansprüchen 2 und 3, dadurch gekennzeichnet, daß die Gegenplatte (52) gebildet ist von einer dünnen elastischen Platte, von der ein Ende (54), das auf einer Seite des drehbaren Endes (34) des Armes (32) angeordnet ist, gegen den Fuß (44) anliegt und an diesem befestigt ist, und deren anderes Ende (48), das auf der anderen Seite des drehbaren Endes (34) angeordnet ist, frei ist und einen aufgebogenen Rand (60) aufweist, den man mit der Hand ergreifen kann, um diese dünne Platte (52) vom Fuß (44) zu entfernen, um durch eine seitliche Verschiebungsbewegung den Arm aus seinem Lager (36) herauszuziehen.

5. Grillguthalter nach wenigstens einem der vorangehenden Ansprüche, dadurch gekennzeichnet, daß der Zapfen (42) zur Begrenzung der Schwenkbewegung aus einem Abschnitt des Armes (32) selbst besteht, wobei dieser Abschnitt (42) dem drehbaren Ende (34) dieses Armes benachbart ist und mit diesem Ende (34) eine Krümmung (48) bildet.

6. Grillguthalter nach wenigstens einem der vorangehenden Ansprüche, dadurch gekennzeichnet, daß der Schöpflöffel (30) eine in einer Richtung parallel zur Richtung des Drehspießes (16) längliche Form aufweist und der Boden dieses Schöpflöffels eine Reihe von querverlaufenden Innenrippen (62) aufweist, die geeignet sind, in diesem Boden eine Reihe von Abteilen (64) zur Verteilung des Bratensaftes auszubilden.

7. Grillguthalter nach wenigstens einem der vorangehenden Ansprüche, dadurch gekennzeichnet, daß die Saftschale (20) geneigte Abschnitte (22) aufweist, die sich von ihrem Rand (24) bis zur einem ebenen Boden (26) in der Mitte zum Sammeln des Bratensaftes erstrecken.

Fig 1

Fig 2

Fig 3

Fig 4

0 200 233